# EUROPÄISCHE PATENTSCHRIFT

(11) **EP 3 879 127 B1**
(45) Veröffentlichungstag und Bekanntmachung des Hinweises auf die Patenterteilung: **14.02.2024**
(21) Anmeldenummer: 20162146.3
(22) Anmeldetag: 10.03.2020
(51) Int. Cl.: F15B 20/00, F15B 13/02, B60P 1/16

(54) **SCHUTZVORRICHTUNG FÜR EIN HYDRAULISCHES ODER PNEUMATISCHES SYSTEM UND FAHRZEUG**
PROTECTION DEVICE FOR A HYDRAULIC OR PNEUMATIC SYSTEM AND VEHICLE
DISPOSITIF DE PROTECTION POUR UN SYSTÈME HYDRAULIQUE OU PNEUMATIQUE ET VÉHICULE

(43) Veröffentlichungstag der Anmeldung: 15.09.2021
(73) Patentinhaber: Schmitz Cargobull AG, 48341 Altenberge (DE)
(72) Erfinder: Hey, Jeffrey, 99867 Gotha (DE); Winter, Ronny, 07749 Jena (DE)
(74) Vertreter: Liedtke & Partner Patentanwälte

(56) Entgegenhaltungen:
- AU-A4- 2009 100 917
- FI-A- 20 020 281
- FI-B- 113 691
- US-A- 3 228 658
- US-A- 5 215 178

## Beschreibung

Die Erfindung betrifft eine Schutzvorrichtung für ein hydraulisches oder pneumatisches System gemäß dem Oberbegriff des Anspruchs 1.

Die Erfindung betrifft weiterhin ein Verfahren zum Betrieb einer solchen Schutzvorrichtung und ein Fahrzeug, umfassend zumindest eine solche Schutzvorrichtung.

Aus der DE 10 2007 017 472 A1 ist ein hydraulisches System zum Kippen einer auf einem Kipperfahrzeug befindlichen Kippbrücke bekannt. Das System umfasst einen Hydraulikzylinder als Kippantriebsaggregat für die Kippbrücke, der aus einer normalen Fahrbetriebsstellung in eine Kippbetriebsstellung überführbar ist. Weiterhin umfasst das System ein mit dem Hydraulikzylinder in Hydraulikverbindung stehendes Kippventil zur Steuerung des Hub- und Senkbetriebs des Hydraulikzylinders, einen mit dem Kippventil in Verbindung stehenden Hydraulikflüssigkeitstank und eine mit dem Tank und dem Kippventil in Verbindung stehende Hydraulikpumpe. Zwischen dem Hydraulikzylinder und dem Tank ist ein das Kippventil umgehendes, druckabhängig wirkendes Sicherungsventil vorgesehen, das derart ausgelegt ist, dass es bei in Fahrbetriebsstellung befindlichem Hydraulikzylinder Druckschwankungen, die zwischen Hydraulikzylinder und Kippventil auftreten, zum Tank hin ableitet.

Weiterhin ist aus der DE 298 15 498 U1 eine Druckschaltventilanordnung mit Überlastsicherungsfunktion für einen hydraulischen Hubzylinder einer hydraulischen Kippeinrichtung eines Fahrzeugs bekannt, wobei die Druckschaltventilanordnung eine Versorgungsleitung für eine Zufuhr eines hydraulischen Druckmediums von einer das Druckmedium aus einem Behälter fördernden Pumpe zu dem hydraulischen Hubzylinder und in der Versorgungsleitung ein in Richtung zu dem hydraulischen Hubzylinder zu öffnendes Rückschlagventil aufweist. Die Druckschaltventilanordnung weist ferner eine zwischen der Pumpe und dem Rückschlagventil von der Versorgungsleitung abgezweigte und zu dem Behälter führende Umlaufleitung und in der Umlaufleitung ein Überdruckventil auf. Das Überdruckventil öffnet gegen eine Kraft einer Ventilschließfeder zu dem Behälter hin, wenn ein Druck in der Versorgungsleitung einen von der Kraft der Ventilschließfeder abhängigen Bezugsdruckwert überschreitet. Ferner weist die Druckschaltventilanordnung eine mit dem Überdruckventil zusammenwirkende Einrichtung auf, die nach dem Öffnen des Überdruckventils dieses in der geöffneten Stellung hält, bis der in der Versorgungsleitung zwischen dem Rückschlagventil und dem hydraulischen Hubzylinder herrschende Druck durch Ableitung von Druckmedium vom hydraulischen Hubzylinder unter einen bestimmten Wert abgesenkt wird. Weiterhin ist eine mittels Steuermitteln elektromotorisch steuerbare Stelleinrichtung zur Beeinflussung eines Spannzustands der Ventilschließfeder des Überdruckventils vorgesehen.

Die CN 201 041 175 Y beschreibt eine automatische Schutzvorrichtung bei einem Platzen einer hydraulischen Hochdruckölleitung für ein Kipperfahrzeug. Die Schutzvorrichtung umfasst ein Ventil, wobei bei einem Platzen der Hochdruckölleitung das Ventil der Schutzvorrichtung automatisch geschlossen wird und ein Ölrücklaufweg eines angehobenen Ölzylinders geschlossen wird.

Weitere Schutzvorrichtungen für hydraulische oder pneumatische Systeme sind aus der FI 113 691 B, der AU 2009 100 917 A4, der US 3 228 658 A und der US 5 215 178 A bekannt.

Der Erfindung liegt die Aufgabe zu Grunde, eine gegenüber dem Stand der Technik verbesserte Schutzvorrichtung für ein hydraulisches oder pneumatisches System, ein verbessertes Verfahren zum Betrieb einer solchen Schutzvorrichtung und ein verbessertes Fahrzeug anzugeben.

Die Aufgabe wird erfindungsgemäß gelöst durch eine Schutzvorrichtung, welche die im Anspruch 1 angegebenen Merkmale aufweist, durch ein Verfahren, welches die im Anspruch 6 angegebenen Merkmale aufweist, und durch ein Fahrzeug, welches die im Anspruch 8 angegebenen Merkmale aufweist.

Die Schutzvorrichtung ist für ein hydraulisches oder pneumatisches System, welches einen hydraulischen oder pneumatischen Aktor und einen Tank zur Bevorratung von Hydraulikflüssigkeit oder eines Gases umfasst, vorgesehen. Die Schutzvorrichtung umfasst ein Sicherungselement, eine Druckleitung und ein zumindest ein Druckausgleichsventil umfassendes Druckausgleichselement. Dabei ist der Aktor mittels des Sicherungselements und der Druckleitung mit dem Tank gekoppelt oder koppelbar. Das Sicherungselement umfasst zumindest ein Ventil, welches während eines Normbetriebs geöffnet ist und bei Erreichen eines definierten Druckunterschieds, bei welchem ein Druck der Hydraulikflüssigkeit oder des Gases innerhalb des Aktors größer ist als ein Druck innerhalb eines dem Tank zugewandten Abschnitts der Druckleitung, einen Durchlass zwischen dem Aktor und dem Tank verschließt. Das Druckausgleichselement ist fluidisch zumindest mittelbar mit einem zur Kopplung mit dem Aktor vorgesehenen Anschluss des Sicherungselements gekoppelt.

Die Schutzvorrichtung ermöglicht mittels des Sicherungselements bei definierten Druckabweichungen zwischen einer Aktorseite und einer Tankseite, das heißt bei Abweichungen vom Normbetrieb, in welchem die Druckabweichungen einen vorgegebenen Grenzwert nicht überschreiten, dass der Aktor von dem Tank bzw. der Druckleitung fluidisch getrennt wird. Dies ist besonders dann vorteilhaft, wenn auf der Tankseite ein Leck auftritt, beispielsweise durch Beschädigung der Druckleitung oder des Tanks selbst, da aufgrund des Verschlusses des Sicherungselements ein Austritt von Hydraulikflüssigkeit oder Gas aus dem Aktor und eine daraus resultierende ungewollte Rückbewegung des Aktors in eine drucklose Ausgangsposition vermieden werden. Somit kann eine ungewollte Bewegung eines mit dem Aktor in seiner Position veränderlichen Bauteils, beispielsweise einer Kippmulde oder eines Auslegers eines Fahrzeugs, vermieden werden. Hieraus resultiert eine erhöhte Sicherheit für Personen und eine Gefahr einer Beschädigung des Bauteils und anderer Objekte in dessen Umgebung wird wirkungsvoll vermieden.

Das Sicherungselement ist beispielsweise als so genannte Rohrbruchsicherung ausgebildet, welche im Allgemeinen ein Gehäuse, ein Verschlusselement und einen Federmechanismus umfasst. Fällt der Druck in der Druckleitung gegenüber dem Druck im Aktor ab, bewegt der Federmechanismus das Verschlusselement und dieses schließt den Durchlass. Hat eine solche Rohrbruchsicherung ausgelöst, kann diese nur durch eine erneute hydraulisch oder pneumatisch durchgeführte Bewegung des Aktors in Richtung von dessen Endanschlag wieder geöffnet werden, indem bei dieser Bewegung ein Druck in der Druckleitung aufgebaut wird, welcher die Verschlusskappe gegen den Federmechanismus öffnet.

Jedoch kann es auch ohne Vorhandensein eines Lecks bei einer hydraulisch oder pneumatisch durchgeführten Bewegung des Aktors zum Zeitpunkt eines Erreichens des Endanschlags des Aktors zu einer Druckabweichung kommen, welche zum Auslösen des Sicherungselements führt. Aufgrund des Erreichens des Endanschlags ist keine weitere hydraulisch oder pneumatisch durchgeführte Bewegung des Aktors in diese Richtung möglich, so dass das Sicherungselement nicht wieder geöffnet werden kann und eine Bewegung des Aktors in seine Ausgangsposition nicht möglich ist.

Dieses Problem wird durch das Druckausgleichselement gelöst, welches bei seiner Öffnung eine Druckverringerung auf der Aktorseite bis zum Erreichen des an der Tankseite vorliegenden Drucks und somit eine Bewegung des Aktors in seine Ausgangsposition oder Nullposition ermöglicht. Bei erneuter hydraulischer oder pneumatischer Beaufschlagung der Druckleitung kann ein Druck in der Druckleitung aufgebaut werden, welcher das Sicherungselement öffnet. Auch ermöglicht das Druckausgleichselement die Bewegung des Aktors in seine Ausgangsposition oder Nullposition, wenn ein Leck auf der Tankseite vorliegt. Somit kann ein mit dem Aktor gekoppeltes Bauteil in eine sichere Ausgangslage bewegt werden.

Weiterhin umfasst die Schutzvorrichtung eine Druckausgleichsleitung mit einer Leitungskoppelstruktur und eine an dem Druckausgleichselement angeordnete und zu dieser Leitungskoppelstruktur komplementäre Elementkoppelstruktur. Ist die Druckausgleichsleitung mit dem Druckausgleichselement gekoppelt, kann über diese in einfacher und zuverlässiger Weise eine in dem Aktor befindliche Hydraulikflüssigkeit oder ein in dem Aktor befindliches Gas in einen dafür vorgesehenen Auffangbehälter geführt werden, so dass eine Kontamination einer Umgebung des hydraulischen oder pneumatischen Systems mit Hydraulikflüssigkeit oder Gas und daraus resultierende Umweltschädigungen sowie Gefahren für Personen wirkungsvoll vermieden werden können.

Zusätzlich umfasst die Schutzvorrichtung eine an einem zur Kopplung mit der Druckleitung vorgesehenen Anschluss des Sicherungselements angeordnete Druckleitungskoppelstruktur, welche zu einer fluidischen Kopplung der Druckleitung mit einer an einem der Leitungskoppelstruktur abgewandten Ende der Druckausgleichsleitung angeordneten weiteren Leitungskoppelstruktur ausgebildet ist. Auch ein somit erzeugter Bypass um das Sicherungselement ermöglicht bei Öffnung des Druckausgleichselements eine Rückführung der Hydraulikflüssigkeit oder des Gases in den Tank und vereinfacht so eine sichere Verringerung des Drucks auf der Aktorseite bei weiterer Verringerung einer Kontaminationsgefahr der Umgebung. Hierbei können eine Länge der Druckausgleichsleitung minimiert und daraus folgend eine Handhabung sowie ein Transport derselben signifikant erleichtert werden.

In einer möglichen Ausgestaltung der Schutzvorrichtung befindet sich das Druckausgleichsventil in einem ungekoppelten Zustand von Druckausgleichsleitung und Druckausgleichselement automatisch in einem geschlossenen Zustand. Das Druckausgleichsventil umfasst einen Betätigungsabschnitt und die Leitungskoppelstruktur umfasst ein zu dem Betätigungsabschnitt komplementäres Betätigungselement, wobei das Betätigungselement im gekoppelten Zustand von Druckausgleichsleitung und Druckausgleichselement derart auf den Betätigungsabschnitt wirkt, dass sich das Druckausgleichsventil in einem geöffneten Zustand befindet. Dies ermöglicht einen sicheren Verschluss des Druckausgleichselements und dass erst bei einer Kopplung desselben mit der Druckausgleichsleitung eine Öffnung desselben erfolgt. Daraus resultiert eine einfache und vor Fehlern geschützte Bedienung durch einen Anwender, so dass die zuvor genannte Kontamination der Umgebung und daraus resultierende Folgen zuverlässig vermieden werden können.

In einer weiteren möglichen Ausgestaltung der Schutzvorrichtung ist das Druckausgleichselement eine Messkupplung, auch als Schraubkupplung oder Diagnosekupplung bezeichnet. Eine solche Messkupplung umfasst ein mechanisch entsperrbares Rückschlagventil, ist kostengünstig verfügbar und in einfacher und zuverlässiger Weise mit dem hydraulischen oder pneumatischen System koppelbar.

In einer weiteren möglichen Ausgestaltung der Schutzvorrichtung ist die Druckleitungskoppelstruktur als Messkupplung ausgebildet. Insbesondere umfasst die Messkupplung ein mechanisch entsperrbares Rückschlagventil, ist kostengünstig verfügbar und in einfacher und zuverlässiger Weise mit dem hydraulischen oder pneumatischen System koppelbar.

In einer weiteren möglichen Ausgestaltung der Schutzvorrichtung umfasst diese eine Fördereinheit zur Förderung von Hydraulikflüssigkeit oder Gas aus dem Tank in den Aktor, um die hydraulische oder pneumatische Beaufschlagung der Druckleitung und des Aktors zu realisieren.

In dem Verfahren zum Betrieb der zuvor beschriebenen Schutzvorrichtung ist das Sicherungselement während des Normbetriebs automatisch geöffnet. Das Sicherungselement wird bei Erreichen eines definierten Druckunterschieds, bei welchem ein Druck der Hydraulikflüssigkeit oder des Gases innerhalb des Aktors größer ist als ein Druck innerhalb eines dem Tank zugewandten Abschnitts der Druckleitung, ausgelöst und verschließt dadurch einen Durchlass zwischen dem Aktor und dem Tank.

Erfindungsgemäß wird dann, wenn die Druckleitung sowie deren Verbindung mit dem Sicherungselement und dem Tank leckfrei sind, das zumindest eine Druckausgleichsventil des Druckausgleichselements zumindest solange geöffnet, bis der Druck der Hydraulikflüssigkeit oder des Gases innerhalb des Aktors zumindest gleich groß wie der Druck innerhalb des dem Tank zugewandten Abschnitts der Druckleitung ist.

Mittels des Verfahrens wird auch nach der Auslösung des Sicherungselements eine Bewegung des Aktors in seine Ausgangsposition oder Nullposition ermöglicht. Somit kann ein mit dem Aktor gekoppeltes Bauteil in eine sichere Ausgangslage bewegt werden.

Weiterhin wird zur Öffnung des Druckausgleichventils die Leitungskoppelstruktur der Druckausgleichsleitung mit der an dem Druckausgleichselement angeordneten und zu dieser Leitungskoppelstruktur komplementären Elementkoppelstruktur gekoppelt. Während dieser Kopplung wird ein Betätigungsabschnitt des Druckausgleichselements von einem Betätigungselement der Leitungskoppelstruktur derart betätigt, dass das Druckausgleichsventil geöffnet wird. Dies ermöglicht einen sicheren Verschluss des Druckausgleichselements und dass erst bei einer Kopplung desselben mit der Druckausgleichsleitung eine Öffnung desselben erfolgt. Daraus resultiert eine einfache und vor Fehlern geschützte Bedienung durch einen Anwender, so dass die zuvor genannte Kontamination der Umgebung und daraus resultierende Folgen zuverlässig vermieden werden können.

In einer weiteren möglichen Ausgestaltung des Verfahrens wird vor der Kopplung der Druckausgleichsleitung mit dem Druckausgleichselement die Druckausgleichsleitung mit dem der Leitungskoppelstruktur abgewandten Ende fluidisch mit der Druckleitung gekoppelt. Auch ein somit erzeugter Bypass um das Sicherungselement ermöglicht bei Öffnung des Druckausgleichselements eine Rückführung der Hydraulikflüssigkeit oder des Gases in den Tank und vereinfacht so eine sichere Verringerung des Drucks auf der Aktorseite bei weiterer Verringerung einer Kontaminationsgefahr der Umgebung. Aufgrund einer möglichen Minimierung einer Länge der Druckausgleichsleitung werden eine Handhabung sowie ein Transport derselben signifikant erleichtert.

Das erfindungsgemäße Fahrzeug umfasst ein hydraulisches oder pneumatisches System und zumindest eine zuvor beschriebene Schutzvorrichtung. Die Schutzvorrichtung ermöglicht mittels des Sicherungselements bei definierten Druckabweichungen zwischen der Aktorseite und der Tankseite, dass der Aktor von dem Tank bzw. der Druckleitung fluidisch getrennt wird. Dies ist besonders dann vorteilhaft, wenn auf der Tankseite ein Leck auftritt, beispielsweise durch Beschädigung der Druckleitung oder des Tanks selbst, da aufgrund des Verschlusses des Sicherungselements der Austritt von Hydraulikflüssigkeit oder Gas aus dem Aktor und eine daraus resultierende ungewollte Rückbewegung des Aktors in eine drucklose Ausgangsposition vermieden werden. Somit kann eine ungewollte Bewegung eines mit dem Aktor in seiner Position veränderlichen Bauteils des Fahrzeugs vermieden werden. Hieraus resultiert eine erhöhte Sicherheit für Personen und eine Gefahr einer Beschädigung des Bauteils und anderer Objekte in dessen Umgebung wird wirkungsvoll vermieden. Weiterhin wird mittels der Schutzvorrichtung auch nach der Auslösung des Sicherungselements eine Bewegung des Aktors in seine Ausgangsposition oder Nullposition ermöglicht. Somit kann das mit dem Aktor gekoppelte Bauteil in eine sichere Ausgangslage bewegt werden.

In einer möglichen Ausgestaltung des Fahrzeugs umfasst dieses eine Kippmulde, welche mittels eines hydraulischen oder pneumatischen Aktors des hydraulischen oder pneumatischen Systems, beispielsweise eines Hydraulik- oder Pneumatikzylinders, aus einer Ausgangsposition in eine gekippte Position überführbar ist. Das Fahrzeug kann hierbei auch ein Fahrzeuggespann sein, bei welchem die Kippmulde Bestandteil eines Anhängers, beispielsweise Aufliegers ist. Der Aktor und das mit diesem gekoppelte Sicherungselement sind mittels des Druckschlauchs mit dem Tank gekoppelt, wobei der Tank bei einem Fahrzeuggespann an einer Zugmaschine angeordnet sein kann. Die Schutzvorrichtung ermöglicht bei einem derart ausgebildeten Fahrzeug aufgrund des Sicherungselements einerseits, dass bei einem Leck in der Druckleitung eine unkontrollierte Bewegung der Kippmulde in ihre Ausgangsposition oder Nullposition und daraus resultierende Gefahren vermieden werden. Weiterhin werden ein Austritt von Hydraulikflüssigkeit oder Gas aus dem Aktor in eine Umgebung des Fahrzeugs vermieden. Zusätzlich ermöglicht die Schutzvorrichtung auch bei im Endanschlag befindlichen Aktor und ausgelöstem Sicherungselement durch Öffnen des Druckausgleichselements eine kontrollierte Bewegung der Kippmulde in ihre Ausgangsposition oder Nullposition.

In einer weiteren möglichen Ausgestaltung des Fahrzeugs umfasst dieses zumindest einen Ausleger, welche mittels eines hydraulischen oder pneumatischen Aktors des hydraulischen oder pneumatischen Systems aus einer Ausgangsposition in eine von dieser abweichende Position überführbar ist. Beispielsweise ist das Fahrzeug ein Bagger oder Kran. Auch bei einer solchen Ausbildung des Fahrzeugs ermöglicht die Schutzvorrichtung aufgrund des Sicherungselements einerseits, dass bei einem Leck in der Druckleitung eine unkontrollierte Bewegung des Auslegers in eine Ausgangsposition oder Nullposition und daraus resultierende Gefahren vermieden werden. Weiterhin werden ein Austritt von Hydraulikflüssigkeit oder Gas aus dem Aktor in eine Umgebung des Fahrzeugs vermieden. Zusätzlich ermöglicht die Schutzvorrichtung auch bei im Endanschlag befindlichen Aktor und ausgelöstem Sicherungselement durch Öffnen des Druckausgleichselements eine kontrollierte Bewegung des Auslegers in seine Ausgangsposition oder Nullposition.

Abweichend von der vorherigen Beschreibung kann die Schutzvorrichtung auch Bestandteil anderer Vorrichtungen mit einem hydraulischen oder pneumatischen System sein, wie zum Beispiel einer Hebe- oder Arbeitsbühne.

Vorteilhafte Ausgestaltungen der Erfindung sind Gegenstand der Unteransprüche.

Ausführungsbeispiele der Erfindung werden im Folgenden anhand von Zeichnungen näher erläutert.

Darin zeigen:
- Figur 1: schematisch einen Ausschnitt eines Fahrzeugs mit einem ersten nicht erfindungsgemäßen Ausführungsbeispiel einer Schutzvorrichtung,
- Figur 2: schematisch einen vergrößerten Ausschnitt des Ausschnitts gemäß Figur 1,
- Figur 3: schematisch einen Ausschnitt eines Fahrzeugs mit einem zweiten erfindungsgemäßen Ausführungsbeispiel einer Schutzvorrichtung und
- Figur 4: schematisch einen vergrößerten Ausschnitt des Ausschnitts gemäß Figur 3.

Einander entsprechende Teile sind in allen Figuren mit den gleichen Bezugszeichen versehen.

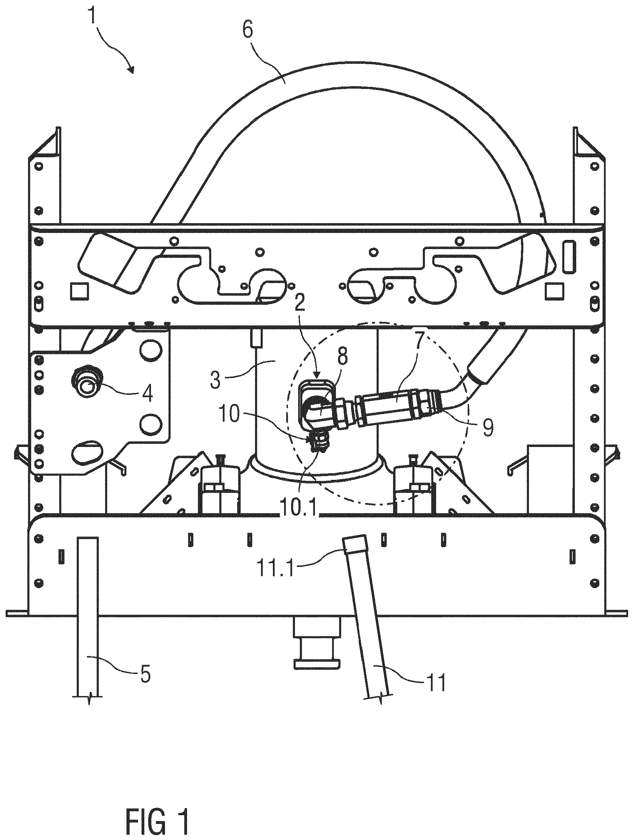

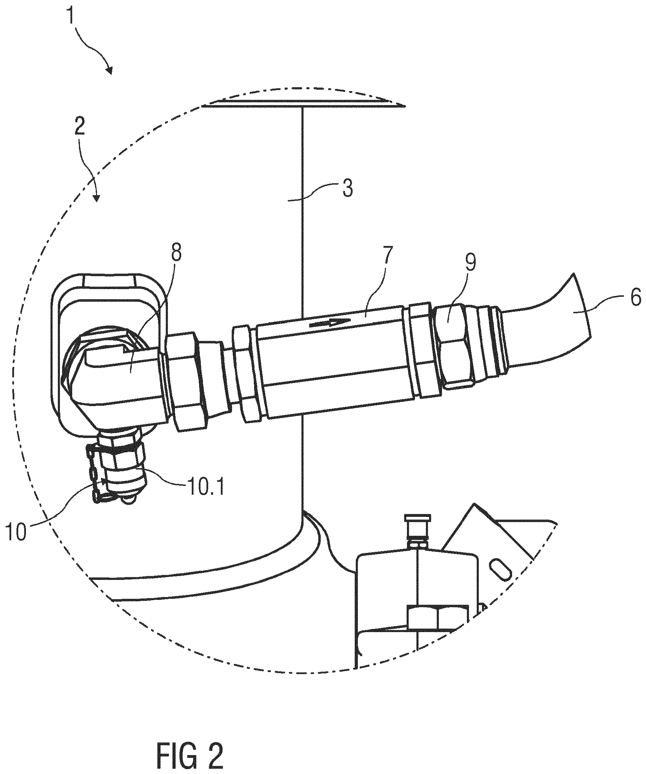

In **Figur 1** ist ein Ausschnitt eines Fahrzeugs 1 mit einem ersten nicht erfindungsgemäßen Ausführungsbeispiel einer Schutzvorrichtung 2 dargestellt. **Figur 2** zeigt einen vergrößerten Ausschnitt dieses Ausschnitts.

Das Fahrzeug 1 ist beispielsweise ein Fahrzeuggespann, umfassend ein nicht näher dargestelltes Zugfahrzeug und einen nicht näher dargestellten Auflieger mit einer Kippmulde. In nicht näher dargestellten Ausführungsbeispielen kann das Fahrzeug 1 auch jedes andere denkbare Fahrzeug sein.

Zu einer Entladung der Kippmulde, insbesondere zur Entladung von Schüttgut, ist eine Bewegung der Kippmulde aus einer Ausgangsposition oder Nullposition in eine gekippte Position erforderlich, welche vorliegend mittels eines an dem Auflieger angeordneten hydraulischen Aktors 3, insbesondere eines Hydraulikzylinders, erfolgt. In nicht näher dargestellten Ausführungsbeispielen kann der Aktor 3 auch pneumatisch betätigt sein.

Zur Erzeugung der Bewegung umfasst das Fahrzeug 1, im beschriebenen Ausführungsbeispiel insbesondere das Zugfahrzeug, einen Tank zur Bevorratung einer Hydraulikflüssigkeit sowie eine Fördereinheit zur Förderung von Hydraulikflüssigkeit aus dem Tank in den Aktor 3.

Weiterhin umfasst das Fahrzeug 1, im beschriebenen Ausführungsbeispiel insbesondere der Auflieger, ein Koppelelement 4 zur fluidischen Kopplung des Aktors 3 mit einer mit dem Tank gekoppelten Druckleitung 5. An einer zur Kopplung mit dieser Druckleitung 5 abgewandten Seite des Koppelelements 4 ist dieses mit einer weiteren Druckleitung 6 fluidisch gekoppelt, welche wiederum mit dem Aktor 3 fluidisch gekoppelt ist.

Zwischen dem Aktor 3 und der Druckleitung 6 ist ein Sicherungselement 7 angeordnet und fluidisch mit einem Anschluss 8 des Aktors 3 und einem Anschluss 9 der Druckleitung 6 gekoppelt.

Das Sicherungselement 7 umfasst in nicht näher dargestellter Weise zumindest ein Ventil, welches während eines Normbetriebs geöffnet ist und bei Erreichen eines definierten Druckunterschieds, bei welchem ein Druck der Hydraulikflüssigkeit innerhalb des Aktors 3 größer ist als ein Druck innerhalb der Druckleitungen 5, 6, einen Durchlass zwischen dem Aktor 3 und dem Tank verschließt. Somit kann dann, wenn ausgehend von dem Sicherungselement 7 auf einer Tankseite ein Leck auftritt, beispielsweise durch Beschädigung einer der Druckleitungen 5, 6 oder des Tanks selbst, aufgrund des Verschlusses des Sicherungselements 7 ein Austritt von Hydraulikflüssigkeit aus dem Aktor 3 und eine daraus resultierende ungewollte Rückbewegung des Aktors 3 in seine drucklose Ausgangsposition oder Nullposition vermieden werden. Somit kann eine ungewollte Bewegung der Kippmulde vermieden werden.

Das Sicherungselement 7 ist beispielsweise als so genannte Rohrbruchsicherung ausgebildet, welche ein Gehäuse und als Ventil ein Verschlusselement und einen Federmechanismus umfasst. Fällt der Druck in der Druckleitung 6 gegenüber dem Druck im Aktor 3 ab, bewegt der Federmechanismus das Verschlusselement und dieses schließt den Durchlass. Hat eine solche Rohrbruchsicherung ausgelöst, kann diese nur durch eine erneute hydraulisch oder pneumatisch durchgeführte Bewegung des Aktors 3 in Richtung von dessen Endanschlag wieder geöffnet werden, indem bei dieser Bewegung ein Druck in der Druckleitung 6 aufgebaut wird, welcher die Verschlusskappe gegen den Federmechanismus öffnet.

Jedoch kann es auch ohne Vorhandensein eines Lecks bei der hydraulisch durchgeführten Bewegung der Kippmulde zum Zeitpunkt eines Erreichens des Endanschlags des Aktors 3 zu einer Druckabweichung kommen, welche zum Auslösen des Sicherungselements 7 führt. Aufgrund des Erreichens des Endanschlags ist keine weitere hydraulisch durchgeführte Bewegung des Aktors 3 in diese Richtung möglich, so dass das Sicherungselement 7 nicht wieder geöffnet werden kann und eine Bewegung des Aktors 3 in seine Ausgangsposition nicht möglich ist.

Um dennoch eine Öffnung des Sicherungselements 7 zu ermöglichen, ist ein Druckausgleichselement 10 fluidisch zumindest mittelbar mit dem Anschluss 8 gekoppelt. Das Druckausgleichselement 10 umfasst ein nicht näher dargestelltes Druckausgleichsventil, welches bei seiner Öffnung eine Druckverringerung auf der Aktorseite zumindest bis zum Erreichen des an der Tankseite vorliegenden Drucks und somit eine Bewegung des Aktors 3 und der Kippmulde in ihre Ausgangsposition oder Nullposition ermöglicht. Bei erneuter hydraulischer oder pneumatischer Beaufschlagung der Druckleitungen 5, 6 kann anschließend wieder ein Druck in den Druckleitungen 5, 6 aufgebaut werden, welcher das Sicherungselement 7 öffnet. Auch ermöglicht das Druckausgleichselement 10 eine gesteuerte Bewegung des Aktors 3 und der Kippmulde in ihre Ausgangsposition oder Nullposition, wenn ein Leck auf der Tankseite vorliegt. Somit kann die Kippmulde in eine sichere Ausgangslage bewegt werden.

Das Druckausgleichselement 10 ist im dargestellten Ausführungsbeispiel als Messkupplung, auch als Schraubkupplung oder Diagnosekupplung bezeichnet, ausgebildet und umfasst als Druckausgleichsventil ein mechanisch entsperrbares Rückschlagventil.

An das Druckausgleichselement 10 ist eine Druckausgleichsleitung 11 koppelbar, wobei die Druckausgleichsleitung 11 hierzu eine Leitungskoppelstruktur 11.1 umfasst, welche komplementär zu einer Elementkoppelstruktur 10.1 des Druckausgleichselements 10 ausgebildet ist.

Das Druckausgleichsventil befindet sich in einem ungekoppelten Zustand von Druckausgleichsleitung 11 und Druckausgleichselement 10 automatisch in einem geschlossenen Zustand. Wird jedoch die Druckausgleichsleitung 11 mit dem Druckausgleichselement 10 gekoppelt, wird ein nicht näher dargestellter Betätigungsabschnitt des Druckausgleichselements 10 von einem ebenfalls nicht näher dargestellten Betätigungselement der Leitungskoppelstruktur 11.1 derart betätigt, dass das Druckausgleichsventil geöffnet wird.

Um eine Kontamination einer Umgebung des Fahrzeugs 1 mit austretender Hydraulikflüssigkeit zu vermeiden, ist eine an dem Tank ausgebildete Tankkoppelstruktur vorgesehen, welche zu einer fluidischen Kopplung des Tanks mit einem der Leitungskoppelstruktur 11.1 abgewandten Ende der Druckausgleichsleitung 11 ausgebildet ist. Dabei erfolgt vor der Kopplung der Druckausgleichsleitung 11 mit dem Druckausgleichselement 10 die fluidische Kopplung der Druckausgleichsleitung 11 mit dem Tank. Somit kann bei der Durchführung des Druckausgleichs aus dem Aktor 3 austretende Hydraulikflüssigkeit sicher in den Tank zurückgeführt werden.

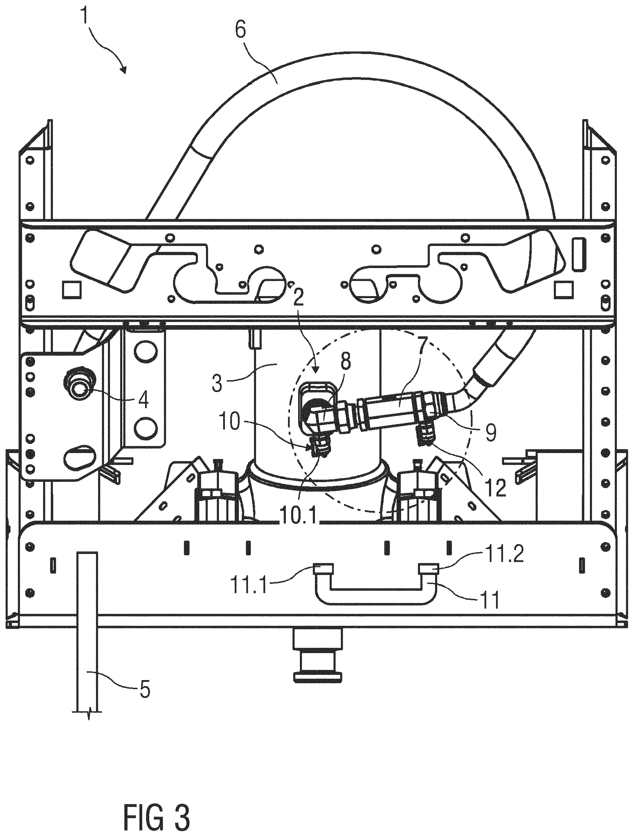

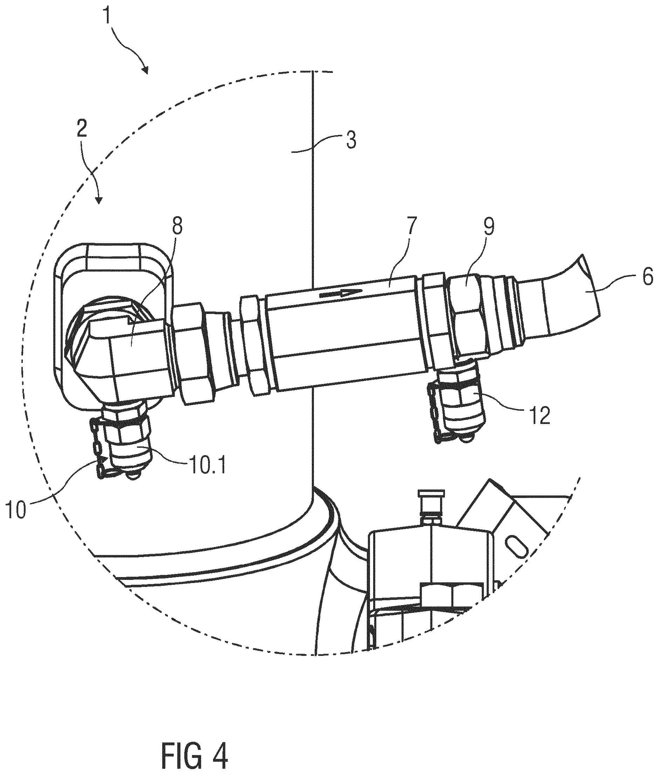

In **Figur 3** ist ein Ausschnitt eines Fahrzeugs 1 mit einem zweiten erfindungsgemäßen Ausführungsbeispiel einer Schutzvorrichtung 2 dargestellt. **Figur 4** zeigt einen vergrößerten Ausschnitt dieses Ausschnitts.

Im Unterschied zu dem in den Figuren 1 und 2 dargestellten ersten Ausführungsbeispiel umfasst die Schutzvorrichtung 2 eine an dem zur Kopplung mit der Druckleitung 6 vorgesehenen Anschluss 9 des Sicherungselements 7 angeordnete Druckleitungskoppelstruktur 12, welche zu einer fluidischen Kopplung der Druckleitung 6 mit einer an einem der Leitungskoppelstruktur 11.1 abgewandten Ende der Druckausgleichsleitung 11 angeordneten weiteren Leitungskoppelstruktur 11.2 ausgebildet ist.

Auch die Druckleitungskoppelstruktur 12 ist beispielsweise als Messkupplung ausgebildet.

Um nach der Kopplung der Druckausgleichsleitung 11 mit dem Druckausgleichselement 10 und vor der Kopplung mit der Druckleitungskoppelstruktur 12 ein Austreten der Hydraulikflüssigkeit aus der Druckausgleichsleitung 11 zu vermeiden, umfasst die Leitungskoppelstruktur 11.2 ein entsprechendes Ventil, welches erst bei Kopplung mit der Druckleitungskoppelstruktur 12 öffnet. Alternativ oder zusätzlich kann auch die Leitungskoppelstruktur 11.1 ein solches Ventil umfassen. Weisen beide Leitungskoppelstrukturen 11.1, 11.2 ein solches Ventil auf, kann ein Nutzer die Druckausgleichsleitung 11 in einer beliebigen Reihenfolge koppeln, wobei stets ein Austreten von Hydraulikflüssigkeit aus der Druckausgleichsleitung 11 vermieden wird.

### BEZUGSZEICHENLISTE

- 1: Fahrzeug
- 2: Schutzvorrichtung
- 3: Aktor
- 4: Koppelelement
- 5: Druckleitung
- 6: Druckleitung
- 7: Sicherungselement
- 8: Anschluss
- 9: Anschluss
- 10: Druckausgleichselement
- 10.1: Elementkoppelstruktur
- 11: Druckausgleichsleitung
- 11.1: Leitungskoppelstruktur
- 11.2: Leitungskoppelstruktur
- 12: Druckleitungskoppelstruktur

## Patentansprüche

1. Schutzvorrichtung (2) für ein hydraulisches oder pneumatisches System, welches einen hydraulischen oder pneumatischen Aktor (3) und einen Tank zur Bevorratung von Hydraulikflüssigkeit oder eines Gases umfasst,
mit einem Sicherungselement (7), einer Druckleitung (6) und einem zumindest ein Druckausgleichsventil umfassenden Druckausgleichselement (10), wobei
- der Aktor (3) mittels des Sicherungselements (7) und der Druckleitung (6) mit dem Tank koppelbar ist,
- das Sicherungselement (7) zumindest ein Ventil umfasst, welches während eines Normbetriebs geöffnet ist und bei Erreichen eines definierten Druckunterschieds, bei welchem ein Druck der Hydraulikflüssigkeit oder des Gases innerhalb des Aktors (3) größer ist als ein Druck innerhalb eines dem Tank zugewandten Abschnitts der Druckleitung (6), einen Durchlass zwischen dem Aktor (3) und dem Tank verschließt, und
- das Druckausgleichselement (10) fluidisch zumindest mittelbar mit einem zur Kopplung mit dem Aktor (3) vorgesehenen Anschluss (8) des Sicherungselements (7) gekoppelt ist
**gekennzeichnet durch**
- eine Druckausgleichsleitung (11) mit einer Leitungskoppelstruktur (11.1),
- eine an dem Druckausgleichselement (10) angeordnete und zu dieser Leitungskoppelstruktur (11.1) komplementäre Elementkoppelstruktur (10.1) und
- eine an einem zur Kopplung mit der Druckleitung (6) vorgesehenen Anschluss (9) des Sicherungselements (7) angeordnete Druckleitungskoppelstruktur (12), welche zu einer fluidischen Kopplung der Druckleitung (6) mit einer an einem der Leitungskoppelstruktur (11.1) abgewandten Ende der Druckausgleichsleitung (11) angeordneten weiteren Leitungskoppelstruktur (11.2) ausgebildet ist.

2. Schutzvorrichtung (2) nach Anspruch 1, **dadurch gekennzeichnet, dass**
- sich das Druckausgleichsventil in einem ungekoppelten Zustand von Druckausgleichsleitung (11) und Druckausgleichselement (10) automatisch in einem geschlossenen Zustand befindet,
- das Druckausgleichsventil einen Betätigungsabschnitt und die Leitungskoppelstruktur (11.1) ein zu dem Betätigungsabschnitt komplementäres Betätigungselement umfassen und
- das Betätigungselement im gekoppelten Zustand von Druckausgleichsleitung (11) und Druckausgleichselement (10) derart auf den Betätigungsabschnitt wirkt, dass sich das Druckausgleichsventil in einem geöffneten Zustand befindet.

3. Schutzvorrichtung (2) nach einem der vorhergehenden Ansprüche, wobei das Druckausgleichselement (10) eine Messkupplung ist.

4. Schutzvorrichtung (2) nach einem der vorhergehenden Ansprüche, **dadurch gekennzeichnet, dass** die Druckleitungskoppelstruktur (12) als Messkupplung ausgebildet ist.

5. Schutzvorrichtung (2) nach einem der vorhergehenden Ansprüche, **gekennzeichnet durch** eine Fördereinheit zur Förderung von Hydraulikflüssigkeit oder Gas aus dem Tank in den Aktor (3).

6. Verfahren zum Betrieb einer Schutzvorrichtung (2) nach einem der vorhergehenden Ansprüche, wobei
- das Sicherungselement (7) während des Normbetriebs automatisch geöffnet ist,
- das Sicherungselement (7) bei Erreichen eines definierten Druckunterschieds, bei welchem ein Druck der Hydraulikflüssigkeit oder des Gases innerhalb des Aktors (3) größer ist als ein Druck innerhalb eines dem Tank zugewandten Abschnitts der Druckleitung (6), ausgelöst wird und dieses einen Durchlass zwischen dem Aktor (3) und dem Tank verschließt, **dadurch gekennzeichnet, dass**
- dann, wenn die Druckleitung (6) sowie deren Verbindung mit dem Sicherungselement (7) und dem Tank leckfrei sind, das zumindest eine Druckausgleichsventil des Druckausgleichselements (10) zumindest solange geöffnet wird, bis der Druck der Hydraulikflüssigkeit oder des Gases innerhalb des Aktors (3) zumindest gleich groß wie der Druck innerhalb des dem Tank zugewandten Abschnitts der Druckleitung (6) ist, wobei zur Öffnung des Druckausgleichsventils die Leitungskoppelstruktur (11.1) der Druckausgleichsleitung (11) mit der an dem Druckausgleichselement (10) angeordneten und zu dieser Leitungskoppelstruktur (11.1) komplementären Elementkoppelstruktur (10.1) gekoppelt wird und
- während der Kopplung ein Betätigungsabschnitt des Druckausgleichselements (10) von einem Betätigungselement der Leitungskoppelstruktur (11.1) derart betätigt wird, dass das Druckausgleichsventil geöffnet wird.

7. Verfahren nach Anspruch 6, **dadurch gekennzeichnet, dass** vor der Kopplung der Druckausgleichsleitung (11) mit dem Druckausgleichselement (10) die Druckausgleichsleitung (11) mit dem der Leitungskoppelstruktur (11.1) abgewandten Ende fluidisch mit der Druckleitung (6) gekoppelt wird.

8. Fahrzeug (1), umfassend ein hydraulisches oder pneumatisches System und zumindest eine Schutzvorrichtung (2) gemäß einem der Ansprüche 1 bis 5.

9. Fahrzeug (1) nach Anspruch 8, umfassend eine Kippmulde, welche mittels eines hydraulischen oder pneumatischen Aktors (3) des hydraulischen oder pneumatischen Systems aus einer Ausgangsposition in eine gekippte Position überführbar ist.

10. Fahrzeug (1) nach Anspruch 8 oder 9, umfassend zumindest einen Ausleger, welcher mittels eines hydraulischen oder pneumatischen Aktors (3) des hydraulischen oder pneumatischen Systems aus einer Ausgangsposition in eine von dieser abweichende Position überführbar ist.

## Claims

1. Protective device (2) for a hydraulic or pneumatic system, which system comprises a hydraulic or pneumatic actuator (3) and a tank for storing hydraulic fluid or a gas, having a securing element (7), having a pressure line (6) and having a pressure equalization element (10) which comprises at least one pressure equalization valve, wherein
- the actuator (3) is couplable by means of the securing element (7) and the pressure line (6) to the tank,
- the securing element (7) comprises at least one valve which is open during normal operation and which, if a defined pressure difference by which a pressure of the hydraulic fluid or the gas within the actuator (3) is greater than a pressure within a portion, close to the tank, of the pressure line (6) is attained, closes off a passage between the actuator (3) and the tank, and
- the pressure equalization element (10) is fluidically at least indirectly coupled to a connection (8), intended for coupling to the actuator (3), of the securing element (7),
**characterized by**
- a pressure equalization line (11) with a line coupling structure (11.1),
- an element coupling structure (10.1) which is arranged on the pressure equalization element (10) and which is complementary to said line coupling structure (11.1), and
- a pressure-line coupling structure (12) which is arranged on a connection (9), intended for coupling to the pressure line (6), of the securing element (7) and which is configured for fluidic coupling of the pressure line (6) to a further line coupling structure (11.2) which is arranged on an end of the pressure equalization line (11) that is remote from the line coupling structure (11.1).

2. Protective device (2) according to Claim 1, **characterized in that**
- the pressure equalization valve, in an uncoupled state of pressure equalization line (11) and pressure equalization element (10), is automatically in a closed state,
- the pressure equalization valve comprises an actuation portion and the line coupling structure (11.1) comprises an actuation element which is complementary to the actuation portion, and
- the actuation element, in the coupled state of pressure equalization line (11) and pressure equalization element (10), acts on the actuation portion in such a way that the pressure equalization valve is in an open state.

3. Protective device (2) according to either of the preceding claims, wherein the pressure equalization element (10) is a measurement coupling.

4. Protective device (2) according to one of the preceding claims, **characterized in that** the pressure-line coupling structure (12) is designed as a measurement coupling.

5. Protective device (2) according to one of the preceding claims, **characterized by** a delivery unit for delivering hydraulic fluid or gas from the tank into the actuator (3).

6. Method for operating a protective device (2) according to one of the preceding claims, wherein
- the securing element (7) is automatically open during normal operation,
- the securing element (7) is triggered if a defined pressure difference by which a pressure of the hydraulic fluid or the gas within the actuator (3) is greater than a pressure within a portion, close to the tank, of the pressure line (6) is attained, and said securing element closes off a passage between the actuator (3) and the tank, **characterized in that**,
- if the pressure line (6) and its connection to the securing element (7) and to the tank are free of leakage, the at least one pressure equalization valve of the pressure equalization element (10) is opened at least until the pressure of the hydraulic fluid or the gas within the actuator (3) is at least equal to the pressure within the portion of the pressure line (6) close to the tank, wherein, for opening the pressure equalization valve,
- the line coupling structure (11.1) of the pressure equalization line (11) is coupled to the element coupling structure (10.1) arranged on the pressure equalization element (10) and complementary to said line coupling structure (11.1), and,
- during the coupling, an actuation portion of the pressure equalization element (10) is actuated by an actuation element of the line coupling structure (11.1) in such a way that the pressure equalization valve is opened.

7. Method according to Claim 6, **characterized in that**, prior to the coupling of the pressure equalization line (11) to the pressure equalization element (10), the pressure equalization line (11) is fluidically coupled to the pressure line (6) by way of the end which is remote from the line coupling structure (11.1) .

8. Vehicle (1) comprising a hydraulic or pneumatic system and at least one protective device (2) according to one of Claims 1 to 5.

9. Vehicle (1) according to Claim 8, comprising a tipping body which is transferable from a starting position into a tipped position by means of a hydraulic or pneumatic actuator (3) of the hydraulic or pneumatic system.

10. Vehicle (1) according to Claim 8 or 9, comprising at least one boom which is transferable from a starting position into a position different therefrom by means of a hydraulic or pneumatic actuator (3) of the hydraulic or pneumatic system.

## Revendications

1. Dispositif de protection (2) pour un système hydraulique ou pneumatique, qui comprend un actionneur hydraulique ou pneumatique (3) et un réservoir pour le stockage de liquide hydraulique ou d'un gaz,
avec un élément de sécurité (7), une conduite de pression (6) et un élément de compensation de pression (10) comprenant au moins une soupape de compensation de pression,
- l'actionneur (3) pouvant être accouplé au réservoir au moyen de l'élément de sécurité (7) et de la conduite de pression (6),
- l'élément de sécurité (7) comprenant au moins une soupape, qui est ouverte pendant un fonctionnement normal et lorsqu'une différence de pression définie est atteinte, à laquelle une pression du liquide hydraulique ou du gaz à l'intérieur de l'actionneur (3) est supérieure à une pression à l'intérieur d'une section de la conduite de pression (6) tournée vers le réservoir, ferme un passage entre l'actionneur (3) et le réservoir, et
- l'élément de compensation de pression (10) étant accouplé fluidiquement au moins indirectement à un raccord (8) de l'élément de sécurité (7) prévu pour l'accouplement à l'actionneur (3),
**caractérisé par**
- une conduite de compensation de pression (11) avec une structure d'accouplement de conduite (11.1),
- une structure d'accouplement d'élément (10.1) agencée sur l'élément de compensation de pression (10) et complémentaire à cette structure d'accouplement de conduite (11.1), et
- une structure d'accouplement de conduite de pression (12) agencée sur un raccord (9) de l'élément de sécurité (7) prévu pour l'accouplement à la conduite de pression (6), laquelle est réalisée pour un accouplement fluidique de la conduite de pression (6) à une autre structure d'accouplement de conduite (11.2) agencée à une extrémité de la conduite de compensation de pression (11) détournée de la structure d'accouplement de conduite (11.1).

2. Dispositif de protection (2) selon la revendication 1, **caractérisé en ce que**
- la soupape de compensation de pression se trouve automatiquement dans un état fermé dans un état non accouplé de la conduite de compensation de pression (11) et de l'élément de compensation de pression (10),
- la soupape de compensation de pression comprend une section d'actionnement et la structure d'accouplement de conduite (11.1) comprend un élément d'actionnement complémentaire à la section d'actionnement, et
- l'élément d'actionnement agit sur la section d'actionnement à l'état accouplé de la conduite de compensation de pression (11) et de l'élément de compensation de pression (10) de telle sorte que la soupape de compensation de pression se trouve dans un état ouvert.

3. Dispositif de protection (2) selon l'une quelconque des revendications précédentes, dans lequel l'élément de compensation de pression (10) est un accouplement de mesure.

4. Dispositif de protection (2) selon l'une quelconque des revendications précédentes, **caractérisé en ce que** la structure d'accouplement de conduite de pression (12) est réalisée sous forme d'accouplement de mesure.

5. Dispositif de protection (2) selon l'une quelconque des revendications précédentes, **caractérisé par** une unité de transport pour transporter le liquide hydraulique ou le gaz du réservoir dans l'actionneur (3).

6. Procédé d'exploitation d'un dispositif de protection (2) selon l'une quelconque des revendications précédentes, dans lequel
- l'élément de sécurité (7) est automatiquement ouvert pendant le fonctionnement normal,
- l'élément de sécurité (7) est déclenché lorsqu'une différence de pression définie est atteinte, à laquelle une pression du liquide hydraulique ou du gaz à l'intérieur de l'actionneur (3) est supérieure à une pression à l'intérieur d'une section de la conduite de pression (6) tournée vers le réservoir, et celui-ci ferme un passage entre l'actionneur (3) et le réservoir, **caractérisé en ce que**
- lorsque la conduite de pression (6) ainsi que sa liaison à l'élément de sécurité (7) et au réservoir sont exemptes de fuites, l'au moins une soupape de compensation de pression de l'élément de compensation de pression (10) est ouverte au moins jusqu'à ce que la pression du liquide hydraulique ou du gaz à l'intérieur de l'actionneur (3) soit au moins égale à la pression à l'intérieur de la section de la conduite de pression (6) tournée vers le réservoir ; pour ouvrir la soupape de compensation de pression,
- la structure d'accouplement de conduite (11.1) de la conduite de compensation de pression (11) étant accouplée à la structure d'accouplement d'élément (10.1) agencée sur l'élément de compensation de pression (10) et complémentaire à cette structure d'accouplement de conduite (11.1) et
- pendant l'accouplement, une section d'actionnement de l'élément de compensation de pression (10) étant actionnée par un élément d'actionnement de la structure d'accouplement de conduite (11.1) de telle sorte que la soupape de compensation de pression est ouverte.

7. Procédé selon la revendication 6, **caractérisé en ce qu'**avant l'accouplement de la conduite de compensation de pression (11) à l'élément de compensation de pression (10), la conduite de compensation de pression (11) est accouplée fluidiquement à la conduite de pression (6) avec l'extrémité détournée de la structure d'accouplement de conduite (11.1).

8. Véhicule (1), comprenant un système hydraulique ou pneumatique et au moins un dispositif de protection (2) selon l'une quelconque des revendications 1 à 5.

9. Véhicule (1) selon la revendication 8, comprenant une benne basculante qui peut être transférée au moyen d'un actionneur hydraulique ou pneumatique (3) du système hydraulique ou pneumatique d'une position initiale à une position basculée.

10. Véhicule (1) selon la revendication 8 ou 9, comprenant au moins un bras qui peut être transféré au moyen d'un actionneur hydraulique ou pneumatique (3) du système hydraulique ou pneumatique d'une position initiale à une position différente de celle-ci.
